# EUROPÄISCHE PATENTANMELDUNG

(11) **EP 2 447 566 A2**
(43) Veröffentlichungstag der Anmeldung: **02.05.2012**
(21) Anmeldenummer: 11182840.6
(22) Anmeldetag: 27.09.2011
(51) Int. Cl.: F16F 9/512, F16F 9/46

(54) **Schwingungsdämpfer mit amplitudenselektiver Dämpfkraft**

(30) Priorität: 27.10.2010 DE 102010049828
(71) Anmelder: ZF Friedrichshafen AG, 88038 Friedrichshafen (DE)
(72) Erfinder: Rölleke, Hartmut, 57635 Kircheib (DE); Keuenhof, Guido, 53567 Buchholz (DE); Bender, Burkhard, 51570 Windeck (DE)

(57) **Zusammenfassung**

Schwingungsdämpfer (1), umfassend einen Zylinder (3), in dem eine Kolbenstange (5) axial verschiebbar gelagert ist, wobei an der Kolbenstange (5) ein erster Kolben (7) mit Dämpfventilen (9;11) fixiert ist, mit einem zweiten Kolben (13), der Dämpfventile (15;17) aufweist, wobei der zweite Kolben (13) gegen mindestens eine Rückstellfeder (19-25) eine axiale Relativbewegung zur Kolbenstange (5) ausführen kann, wobei sich die mindestens eine Rückstellfeder (19-25) mit ihrem dem zweiten Kolben (13) abgewandten Ende an einem Federteller (27;29) abstützt, der mittels einer Betätigungseinrichtung (31) axial verstellbar ausgeführt ist.

## Beschreibung

Die Erfindung betrifft einen Schwingungsdämpfer mit amplitudenselektiver Dämpfkraft gemäß dem Oberbegriff von Patentanspruch 1.

Die gattungsbildende DE 100 41 199 C1 betrifft einen Schwingungsdämpfer, an dessen Kolbenstange ein erster Kolben befestigt ist. Der Kolben verfügt über Dämpfventile für beide Bewegungsrichtungen der Kolbenstange. Des Weiteren verfügt der Schwingungsdämpfer über einen zweiten Kolben, der gegen die Kraft von mindestens einer Rückstellfeder relativ zur Kolbenstange verschiebbar ausgeführt ist. Auch dieser Kolben weist Dämpfventile für beide Bewegungsrichtungen der Kolbenstange auf.

Bei kleinen Hubbewegungen üben nur die Dämpfventile des fest mit der Kolbenstange verbundenen ersten Kolbens eine Dämpfkraft auf. Wenn die Hubbewegung so groß ist, dass der zweite Kolben die Rückstellfeder so weit vorgespannt hat, dass bei einer weiteren Kolbenstangenbewegung eine ortsfeste Betriebsstellung des zweiten Kolbens zur Kolbenstange vorliegt, dann überlagern sich die Dämpfkräfte der Dämpfventile der beiden Kolben.

Ein derartiger Schwingungsdämpfer führt im Vergleich zu einem konventionellen Schwingungsdämpfer mit nur einem festen Kolben zu einem deutlich komfortableren Fahrverhalten. Insbesondere bei sportlicheren Fahrzeugen wird jedoch diese betont komfortorientierte Einstellung als nachteilig angesehen, da das Fahrzeug bei schnellen Fahrtrichtungsänderungen nicht mehr so direkt reagiert. Ein ähnlicher Effekt tritt auf, wenn ein derartiger Schwingungsdämpfer bei einer federnd gelagerten Fahrerkabine verwendet wird.

Die Aufgabe der vorliegenden Erfindung besteht darin, das aus dem Stand der Technik bekannte Problem bei einem gattungsbildenden Schwingungsdämpfer zu lösen.

Erfindungsgemäß wird die Aufgabe dadurch gelöst, dass der Federteller mittels einer Betätigungseinrichtung axial verstellbar ausgeführt ist.

Durch die Axialverschiebung des Federtellers wird die Vorspannung der Rückstellfeder variiert, wodurch wiederum der Einsatzpunkt des axial beweglichen zweiten Kolbens festlegbar ist.

Gemäß einem vorteilhaften Unteranspruch weist die Betätigungseinrichtung eine Betätigungsstange auf, die mit dem Federteller in Wirkverbindung steht. Die Betätigungsstange kann manuell, elektrisch, pneumatisch oder auch hydraulisch angesteuert werden.

Bei einer ersten Ausführungsform ist die Kolbenstange hohl ausgeführt und innerhalb der hohlen Kolbenstange ist die Betätigungsstange angeordnet.

Dabei weist die Kolbenstange einen Längsschlitz auf, in dem ein Querbolzen axial beweglich geführt ist, der mit dem Federteller zusammenwirkt, wobei die Betätigungsstange am Querbolzen angreift.

Alternativ wird die Betätigungsstange von einer Hülse gebildet, die auf der Kolbenstange geführt ist.

Man kann vorsehen, dass die Betätigungsstange eine Drehbewegung ausführt und diese Drehbewegung mittels eines Gewindes in eine Axialbewegung des Federtellers umgesetzt wird.

Anhand der folgenden Figurenbeschreibung soll die Erfindung näher erläutert werden.

Es zeigt:
- Fig. 1: Ausführungsform der Erfindung mit einer hohlen Kolbenstange

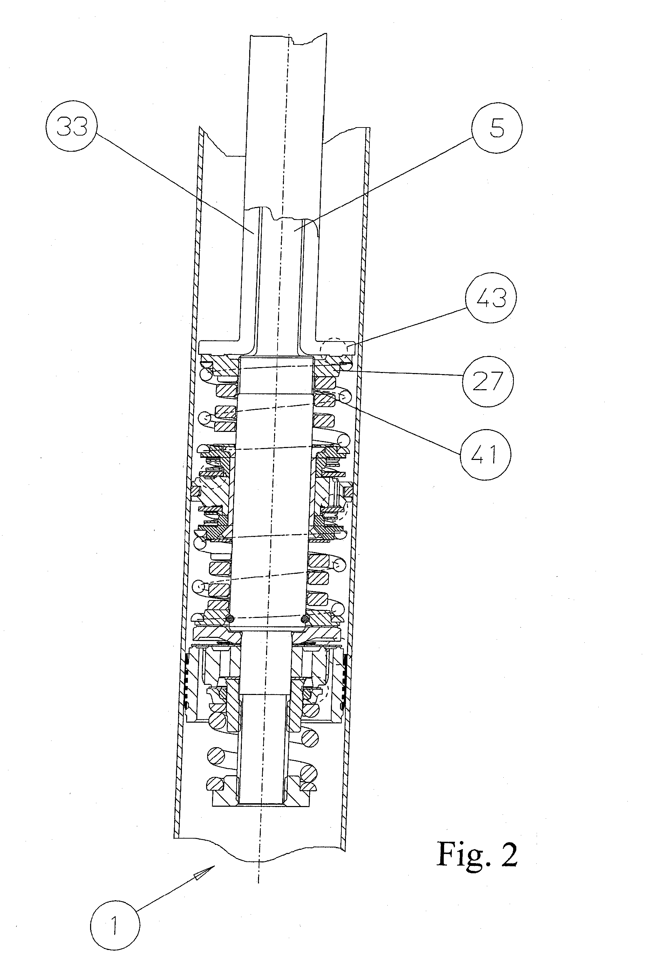

- Fig. 2: Alternativvariante mit einer Hülse als Betätigungsstange

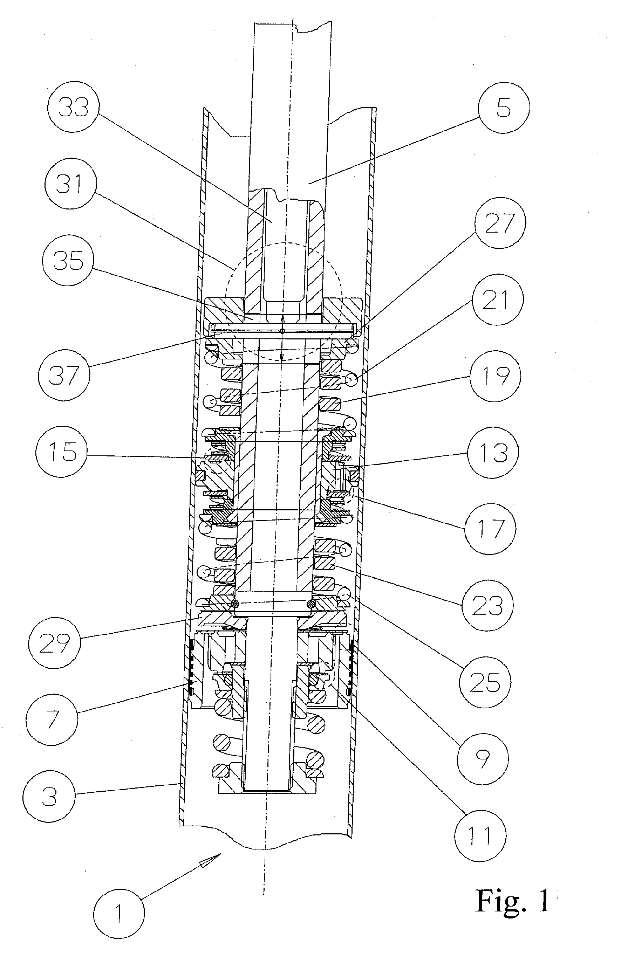

Die Figur 1 zeigt einen Ausschnitt aus einem Schwingungsdämpfer 1 beliebiger Bauform. In einem Zylinder 3 ist eine Kolbenstange 5 axial verschiebbar gelagert, an der ein erster Kolben 7 fixiert ist. Der Kolben verfügt Dämpfventile 9; 11 für beide Bewegungsrichtungen der Kolbenstange 5.

Auf einer Mantelfläche der Kolbenstange 5 ist ein zweiter Kolben 13 verschiebbar geführt. Der Kolben 13 verfügt ebenfalls über Dämpfventile 15; 17 für zwei Bewegungsrichtungen der Kolbenstange 5, wobei der konkrete Aufbau der Dämpfventile 15; 17 für die vorliegende Erfindung untergeordnet ist.

Der zweite Kolben 13 wird beidseitig von mindestens einer Rückstellfeder 19 - 25 in einer definierten Ausgangsposition auf der Kolbenstange 5 gehalten. Mit ihren dem Kolben abgewandten Ende stützen sich die Rückstellfedern 19 - 25 an einem Federteller 27; 29 ab. In diesem Ausführungsbeispiel kommen zwei Rückstellfedern an jeder Kolbenseite zur Anwendung.

Der Federteller 27 ist über eine Betätigungseinrichtung 31 axial verstellbar ausgeführt. Dafür ist die Kolbenstange 5 in diesem Ausführungsbeispiel hohl ausgeführt und innerhalb der hohlen Kolbenstange 5 ist eine Betätigungsstange 33 angeordnet ist, die mit dem Federteller 27 in Wirkverbindung steht. Die Kolbenstange 5 weist einen Längsschlitz 35 auf, in dem ein Querbolzen 37 axial beweglich geführt ist, der mit dem Federteller 27 zusammenwirkt, wobei die Betätigungsstange 33 am Querbolzen 37 angreift. Die Betätigungsstange 33 kann manuell oder durch Fremdenergie axial angesteuert sein. Damit sich der Querbolzen 37 seitlich nicht aus dem Schlitz bewegen kann, kommt eine Sicherungsscheibe 39 zur Anwendung, die einfach auf die Kolbenstange 5 aufgefädelt wird. Ein umlaufender Rand der Sicherungsscheibe steht in axialer Überdeckung mit den beiden Stirnseiten des Querbolzens 37.

Zur Verstellung des Federtellers 27 wird auf die Betätigungsstange 33 eine Axialkraft ausgeübt. Dabei kann sich der Querbolzen 37 in dem Längsschlitz 35 der Kolbenstange 5 verschieben. Synchron wird dabei auch der Federteller 27 verschoben, wodurch sich die Vorspannung der Rückstellfedern 19 - 25 und damit auch der Einsatzpunkt des axial beweglichen Kolbens 13 verändert.

Bei einer Alternativvariante wird die Betätigungsstange 33 von einer Hülse gebildet, die auf der Kolbenstange 5 geführt ist. Die Kolbenstange 5 kann dann als massives Bauteil vorgesehen sein. Die Betätigungsstange 33 ragt dann über ein nicht dargestelltes Ende des Zylinders heraus. Eine ebenfalls nicht dargestellte Kolbenstangendichtung gleitet dann auf der Betätigungsstange.

Man kann auch vorsehen, dass die Betätigungsstange 33 eine Drehbewegung ausführt und diese Drehbewegung mittels eines Gewindes 41 in eine Axialbewegung des Federtellers 27 umgesetzt wird. Die Betätigungsstange 33 ist in der Ruheposition nicht mehr der Kraft der Rückstellfedern 19 - 25 ausgesetzt. Die Drehbewegung der Hülse 33 wird über eine beliebige Formschlussverbindung 43 auf den Federteller 27 übertragen. In diesem Fall ist das Gewinde 41 zwischen Federteller 27 und der Kolbenstange 5 ausgeführt. Man kann das Gewinde 41 auch zwischen der Kolbenstange 5 und der Hülse 33 vorsehen.

### Bezugszeichenliste

- 1: Schwingungsdämpfer
- 3: Zylinder
- 5: Kolbenstange
- 7: Kolben
- 9, 11: Dämpfventile
- 13: zweiter Kolben
- 15, 17: Dämpfventile
- 19 - 25: Rückstellfeder
- 27, 29: Federteller
- 31: Betätigungseinrichtung
- 33: Betätigungsstange
- 35: Längsschlitz
- 37: Querbolzen
- 39: Sicherungsscheibe
- 41: Gewinde
- 43: Formschlussverbindung

## Patentansprüche

1. Schwingungsdämpfer (1), umfassend einen Zylinder (3), in dem eine Kolbenstange (5) axial verschiebbar gelagert ist, wobei an der Kolbenstange (5) ein erster Kolben (7) mit Dämpfventilen (9; 11) fixiert ist, mit einem zweiten Kolben (13), der Dämpfventile (15; 17) aufweist, wobei der zweite Kolben (13) gegen mindestens eine Rückstellfeder (19 - 25) eine axiale Relativbewegung zur Kolbenstange (5) ausführen kann, wobei sich die mindestens eine Rückstellfeder (19 - 25) mit ihrem dem zweiten Kolben (13) abgewandten Ende an einem Federteller (27; 29) abstützt,
**dadurch gekennzeichnet,**
**dass** der Federteller (27) mittels einer Betätigungseinrichtung (31) axial verstellbar ausgeführt ist.

2. Schwingungsdämpfer nach Anspruch 1,
**dadurch gekennzeichnet,**
**dass** die Betätigungseinrichtung (31) eine Betätigungsstange (33) aufweist, die mit dem Federteller (27) in Wirkverbindung steht.

3. Schwingungsdämpfer nach Anspruch 1,
**dadurch gekennzeichnet,**
**dass** die Kolbenstange (5) hohl ausgeführt ist und innerhalb der hohlen Kolbenstange (5) die Betätigungsstange (33) angeordnet ist.

4. Schwingungsdämpfer nach Anspruch 2,
**dadurch gekennzeichnet,**
**dass** die Kolbenstange (5) einen Längsschlitz (35) aufweist, in dem ein Querbolzen (37) axial beweglich geführt ist, der mit dem Federteller (27) zusammenwirkt, wobei die Betätigungsstange (33) am Querbolzen (37) angreift.

5. Schwingungsdämpfer nach Anspruch 2,
**dadurch gekennzeichnet,**
**dass** die Betätigungsstange (33) von einer Hülse gebildet wird, die auf der Kolbenstange (5) geführt ist.

6. Schwingungsdämpfer nach Anspruch 5,
**dadurch gekennzeichnet,**
**dass** die Betätigungsstange (33) eine Drehbewegung ausführt und diese Drehbewegung mittels eines Gewindes (41) in eine Axialbewegung des Federtellers (27) umgesetzt wird.
